# EUROPEAN PATENT SPECIFICATION

(11) **EP 3 084 547 B1**
(45) Date of publication and mention of the grant of the patent: **05.02.2020**
(21) Application number: 14871301.9
(22) Date of filing: 16.12.2014
(51) Int. Cl.: G05D 23/32, F24D 19/10, F24H 9/20, H02J 3/14

(54) **DEVICE FOR THE CONTROL OF A CLIMATE EQUIPMENT**
VORRICHTUNG ZUR STEUERUNG EINER KLIMAANLAGE
DISPOSITIF POUR LA COMMANDE D'UN ÉQUIPEMENT DE CLIMATISATION

(30) Priority: 17.12.2013 SE 1330156
(43) Date of publication of application: 26.10.2016
(73) Proprietor: Xip Technology AB, 553 32 Jönköping (SE)
(72) Inventor: HAMMARSTRÖM, Martin, 553 30 Jönköping (SE); ALZÉN, Jimmy, 562 30 Norrahammar (SE); OLSSON, Esko, 554 46 Jönköping (SE)
(74) Representative: Nilsson, Lennart
(86) International application number: PCT/SE2014/051509
(87) International publication number: WO 2015/094100

(56) References cited:
- EP-A2- 1 927 812
- EP-A2- 1 927 812
- EP-A2- 2 093 644
- DE-A1- 2 530 855
- DE-A1- 4 227 515
- FRITZ, P. ET AL.: 'S. Att följa elpriset bättre' PRISMODELLER OCH STYRTEKNIK I FÄLTFÖRSÖK 2009, pages 36 - 51, XP055293751

## Description

The present invention concerns a device according to the preamble of claim 1.

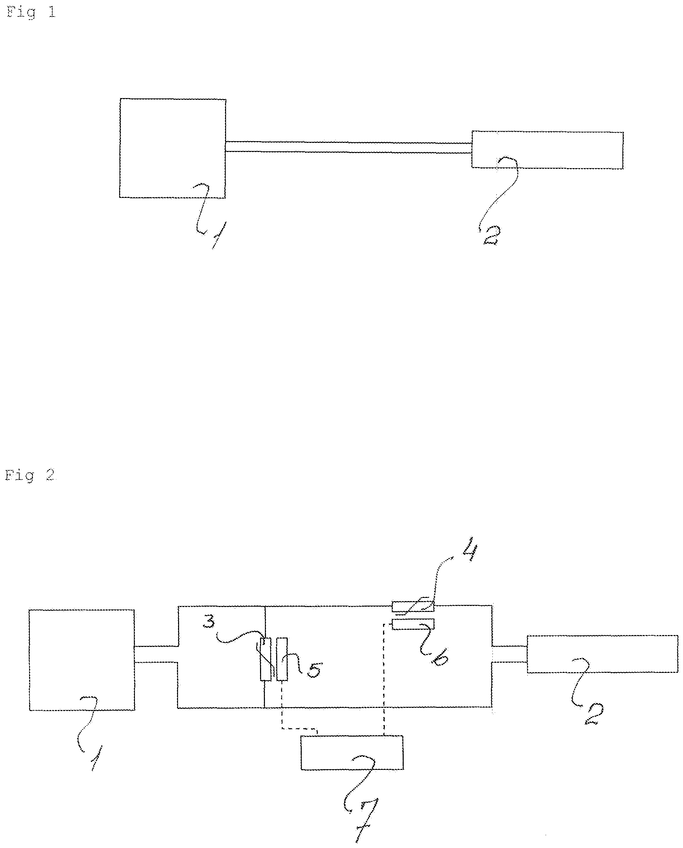

Many heating/cooling systems, or another climate equipment according to drawing figure 1, lack the possibility of external control of temperature or are limited to a great extent.

Methods for connecting a temperature sensor over an interface are known from the prior art, as disclosed in EP1927812A2. In this document, a heating regulator regulates a heating system according to regulation characteristic on the basis of a measured sensor value. The regulation characteristic of the heating regulator is affected by a default correction value. The correction value is formed by a simulation of the sensor value considering the measured sensor value.

The object of the present invention is to enable the desired control.

This is achieved by the device mentioned by way of introduction being given the features of claim 1.

The present invention will in the following be described in more detail, reference being made to the appended drawings. Fig. 1 shows a diagram of a climate equipment for heating or cooling. Fig. 2 shows a diagram of an embodiment of the present inventtion. Fig. 3 shows a diagram of a further embodiment of the present invention. Fig. 4 shows a diagram of yet an embodiment of the present invention.

The climate equipment may comprise a boiler or heat pump for the heating of a number of spaces, to which the heat is transported by air or water

The control may be based on hourly energy prices, control from external decision systems, set threshold values, or on fixed instants of time.

The equipment is connected so that its control equipment actuates the temperature sensors of the heating or cooling system in the desired direction depending on whether the heat/cold should be increased or decreased.

The equipment actuates the temperature sensors by parallelly or serially connecting NTC resistors, which are heated to the desired resistance by means of some type of heater element, e.g. a resistance. This allows galvanic isolated connection to the heating or cooling system.

Many existing heating/cooling systems according to drawing figure 1 have no or limited abilities to control the temperature via external signals or based on instant of time.

Such a control may be desired to get a comfortable climate depending on whether it, for instance, is night or day or based on activity in the affected areas.

In hourly energy pricing, for the economy to become as favourable as possible, it is desirable to be able to actuate the heating/cooling system by letting the system work when the energy is the most inexpensive and hold back when it is more expensive. Since a climate system is inert, it is possible to accumulate, for instance, heat.

The problem is to be able to actuate a heating/cooling system without replacing its control system or reconstructing the same. In certain cases, this is not possible, and in others, this would generate large costs. Also, warranty on equipment could be affected.

Most heating/cooling systems 1 have an external temperature sensor 2, which co-operates with the control curve of the system to deliver the correct amount of heat or cold. See drawing figure 1. By actuating the external temperature sensor 2, the control curve of the heating/cooling system 1 can be affected by letting the system believe that it is warmer or colder than what it really is.

In order for the control system of the heating/cooling system 1 not to be electrically affected, one has to actuate the temperature sensor 2 in a galvanically isolated way. Then, no detrimental potential differences or earth currents can arise, which could damage the control system.

Galvanic connection to the temperature sensor 2 may either be effected thermally by creating an affected climatic zone around the temperature sensor 2 or by resistive connection to the sensor 2.

An affected climatic zone around the sensor 2 may be created by containing the sensor 2 in an enclosure where the air either is heated or cooled in relation to the surroundings outside the enclosure.

A resistive connection to the sensor 2 can be made either by serial or parallel connection of resistors 3 and 4, as is illustrated in the drawing figures 2-4. Then the system can be actuated with both increased and decreased temperature as a consequence.

The resistors 3 and 4 may be of fixed values selected to fit the temperature sensor 2 of the system in question as well as selected actuation of the same.

The resistors 3 and 4 may also be adjustable to fit a plurality of types of heating/cooling systems 2 as well as to actuate the same to different extents.

The adjustable resistors 3 and 4 may either be light-actuated, which are set to the desired resistance by illuminating the same with an adapted amount of light, or heat-actuated by means of elements 5 and 6, which are set to the desired resistance by heating the resistors 3 and 4 with an adapted power by means of a control system 7. See drawing figure 2.

The resistors 3 and 4 are NTC resistors, which are heated to the desired resistance by means of some type of heater element 5 and 6, e.g. a resistance. This allows galvanic isolated connection to the heating or cooling system 1. The resistors 3 and 4 may also be PTC resistors or resistances. The NTC resistors have a negative gradient while the PTC resistors have a positive gradient.

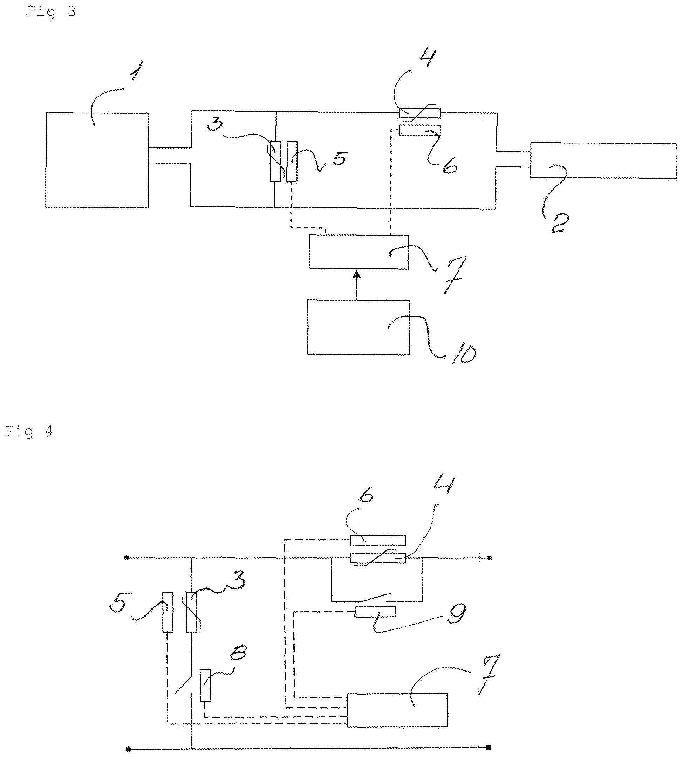

For the connection and disconnection of the regulating resistances 3 and 4, relays 8 and 9 may be used. See drawing figure 4. Relays may also be used for the selection of different resistor values.

The regulating function can be operated via an external decision system 10

The external system 10 may be a database including, for instance, hourly energy prices in combination with customer-set threshold values and desires of the regulating function. See drawing figure 3.

The communication with the external system 10 may, for instance, be effected via Ethernet or 3G/GSM/GPRS.

## Claims

1. Device for controlling a heating/cooling system (1), which heating/cooling system (1) is configured to be coupled to a temperature sensor (2),
**characterized in that** the device comprises
- a number of heat-actuatable NTC resistances (3,4),
- adjacent heater elements (5, 6) for the supply of heat to said resistances (3, 4),
- relays (8, 9) for connecting and disconnecting one or more of said resistances (3,4) in serial connection and parallel connection relatively to sensor (2), and
- a control system (7) configured to power said adjacent heater elements (5, 6),
and **in that**
for the increase or decrease of the heat or the cold provided by means of the system (1),
the device is configured to couple the sensor (2) to the heating/cooling system (1) via said resistances (3,4) thereby providing galvanic separation between the control system (7) and the connection between the
heating/cooling system (1) and the sensor (2).

## Patentansprüche

1. Vorrichtung zum Steuern eines Heiz-/Kühlsystems (1), wobei das Heiz-/Kühlsystem (1) konfiguriert ist, um mit einem Temperatursensor (2) gekoppelt zu werden,
**dadurch gekennzeichnet, dass** die Vorrichtung Folgendes umfasst:
- eine Anzahl von wärmeaktivierbaren NTC-Widerständen (3, 4),
- benachbarte Heizelemente (5, 6) zum Zuführen von Wärme zu den Widerständen (3, 4),
- Relais (8, 9) zum Verbinden und Trennen eines oder mehrerer der Widerstände (3, 4) in Reihenschaltung und Parallelschaltung in Bezug auf den Sensor (2), und
- ein Steuerungssystem (7), das konfiguriert ist, um die benachbarten Heizelemente (5, 6) zu betreiben,
und dass
zur Erhöhung oder Verringerung der Wärme oder der Kälte, die mittels des Systems (1) bereitgestellt wird,
die Vorrichtung konfiguriert ist, um den Sensor (2) über die Widerstände (3, 4) mit dem Heiz-/Kühlsystem (1) zu koppeln, wodurch eine galvanische Trennung zwischen dem Steuerungssystem (7) und der Verbindung zwischen dem Heiz-/Kühlsystem (1) und dem Sensor (2) bereitgestellt wird.

## Revendications

1. Dispositif pour la commande d'un système de chauffage/de refroidissement (1),
lequel système de chauffage/de refroidissement (1) est configuré pour être accouplé à un capteur de température (2),
**caractérisé en ce que** le dispositif comprend
- un nombre de résistances NTC pouvant être activées thermiquement (3, 4),
- des éléments de chauffage adjacents (5, 6) pour la fourniture de chaleur auxdites résistances (3, 4),
- des relais (8, 9) pour le raccordement et le détachement des une ou plusieurs desdites résistances (3, 4) en raccordement en série et en raccordement parallèle par rapport au capteur (2), et
- un système de commande (7) configuré pour alimenter lesdits éléments de chauffage adjacents (5, 6),
et **en ce que**
pour l'augmentation ou la diminution de la chaleur ou le froid fourni au moyen du système (1),
le dispositif est configuré pour accoupler le capteur (2) au système de chauffage/de refroidissement (1) via lesdites résistances (3, 4) fournissant ainsi une séparation galvanique entre le système de commande (7) et le raccordement entre le système de chauffage/de refroidissement (1) et le capteur (2).
